# EUROPEAN PATENT APPLICATION

(11) **EP 3 396 272 A1**
(43) Date of publication of application: **31.10.2018**
(21) Application number: 17168065.5
(22) Date of filing: 25.04.2017
(51) Int. Cl.: F24S 25/30, F24S 30/00, F24S 50/20

(54) **SOLAR ENERGY DEVICES**

(71) Applicant: Vestel Elektronik Sanayi ve Ticaret A.S., 45030 Manisa (TR)
(72) Inventor: USLU, Mutlu, 45030 Manisa (TR); YALIN, Nevzat, 45030 Manisa (TR); ÖZKÜÇÜK, Serhat, 45030 Manisa (TR)
(74) Representative: Flint, Adam

(57) **Abstract**

A technique comprising: measuring at least one performance indicator for each solar energy device of a plurality of solar energy devices; and controlling at least one operating parameter of at least one of the plurality of solar energy devices based at least partly on a measured performance indicator of one or more other solar energy devices of the plurality of solar energy devices.

## Description

Solar energy devices for converting solar radiation into one or more other forms of energy, such as electrical energy or thermal energy, are of increasing interest. One example of a solar energy device is a photovoltaic device that converts incident solar radiation into electrical energy.

A solar energy device may comprise solar cells grouped into solar panels, and a number of solar panels may be grouped together to form a solar farm. One conventional technique of operating a solar farm comprises adjusting the orientation of each solar panel over the course of the day using motors so as to track the known trajectory of the sun in the sky.

One aim identified by the inventors for the present application is to develop a solar farm system that is better suited to installation on rugged terrain or in geographical regions where broken cloud coverage is common.

There is hereby provided a method, comprising: measuring at least one performance indicator for each solar energy device of a plurality of solar energy devices; and controlling at least one operating parameter of at least one of the plurality of solar energy devices based at least partly on a measured performance indicator of one or more other solar energy devices of the plurality of solar energy devices.

There is also hereby provided apparatus, comprising: means for measuring at least one performance indicator for each solar energy device of a plurality of solar energy devices; and means for controlling at least one operating parameter of at least one of the plurality of solar energy devices based at least partly on a measured performance indicator of one or more other solar energy devices of the plurality of solar energy devices.

According to one embodiment, controlling at least one operating parameter of at least one of the plurality of solar energy devices based at least partly on at least one operating parameter of the one or more solar energy devices having the best measured performance indicator.

According to one embodiment, the at least one operating parameter of a solar energy device comprises at least one or more of: (i) the location of the solar energy device relative to another solar energy device of the plurality of solar energy device, and (ii) the orientation of the solar energy device relative to another solar energy device of the plurality of solar energy devices.

According to one embodiment, controlling at least one operating parameter of at least one of the plurality of solar energy devices, comprises controlling the configuration of a support frame supporting the plurality of solar energy devices.

According to one embodiment, controlling the configuration of the support frame supporting the plurality of solar energy device, comprises electrically controlling the temperature of one or more portions of the support frame.

According to one embodiment, the frame comprises a plurality of arms extending from a hub and supporting the plurality of solar energy devices, and controlling the configuration of the support frame comprises controlling the orientation of one or more of the plurality of arms.

According to one embodiment, each arm comprises a plurality of thermally conductive sections separated by thermally insulating sections, and wherein controlling the configuration of the support frame comprises independently controlling the temperature of each thermally conductive section.

According to one embodiment, each thermally conductive section comprises one or more sets of metal rods secured together in parallel, wherein the metal rods in each set comprise rods of different metal materials exhibiting different thermal expansion coefficients.

According to one embodiment, said at least one performance indicator comprises an electrical power output of the solar energy device.

There is also hereby provided a method, comprising: controlling the configuration of a support frame supporting a plurality of solar energy devices, wherein the controlling comprises electrically controlling the temperature of one or more sections of the support frame.

There is also hereby provided a method, comprising: controlling the configuration of a support frame supporting a plurality of solar energy devices, based at least partly on one or more measurements of one or more performance indicators of one or more solar energy devices of the plurality of solar energy devices, wherein the support frame is capable of adopting a plurality of different configurations in which one or more of the solar energy devices have at least different locations and/or orientations relative to one another.

There is also hereby provided apparatus comprising: means for controlling the configuration of a support frame supporting a plurality of solar energy devices, wherein the controlling comprises electrically controlling the temperature of one or more sections of the support frame.

There is also hereby provided apparatus comprising: means for controlling the configuration of a support frame supporting a plurality of solar energy devices, based at least partly on one or more measurements of one or more performance indicators of one or more solar energy devices of the plurality of solar energy devices, wherein the support frame is capable of adopting a plurality of different configurations in which one or more of the solar energy devices have at least different locations and/or orientations relative to one another.

There is also hereby provided an apparatus comprising: a processor and memory including computer program code, wherein the memory and computer program code are configured to, with the processor, cause the apparatus to perform any of the above methods.

There is also hereby provided a computer program product comprising program code means which when loaded into a computer controls the computer to: measure at least one performance indicator for each solar energy device of a plurality of solar energy devices; and control at least one operating parameter of at least one of the plurality of solar energy devices based at least partly on a measured performance indicator of one or more other solar energy devices of the plurality of solar energy devices.

There is also hereby provided a computer program product comprising program code means which when loaded into a computer controls the computer to: control the configuration of a support frame supporting a plurality of solar energy devices, wherein the control comprises electrically controlling the temperature of one or more sections of the support frame.

There is also hereby provided a computer program product comprising program code means which when loaded into a computer controls the computer to: control the configuration of a support frame supporting a plurality of solar energy devices, based at least partly on one or more measurements of one or more performance indicators of one or more solar energy devices of the plurality of solar energy devices, wherein the support frame is capable of adopting a plurality of different configurations in which one or more of the solar energy devices have at least different locations and/or orientations relative to one another.

Embodiments of the present invention are described hereunder, by way of example only, with reference to the accompanying drawings, in which:
Figure 1 illustrates one example of a solar farm system having a spider web geometry, according to an embodiment of the invention;
Figure 2 illustrates an example of a metal frame structure for the system of Figure 1.
Figure 3 illustrates an example of an apparatus for controlling the configuration of a metal frame structure of the system shown in Figure 1;
Figure 4 illustrates an example of a set of operations at a controller of the apparatus of Figure 3; and
Figure 5 illustrates the configuration of the metal frame structure changing in response to some of the solar panels experiencing more cloud shadowing than others.

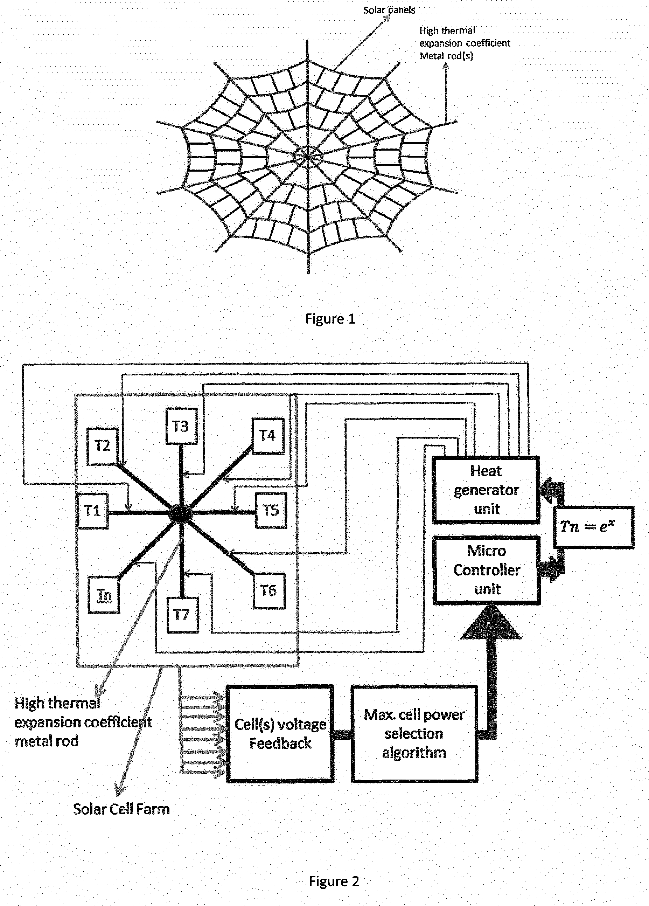

With reference to Figures 1 and 2, a solar panel system according to an embodiment of the present invention comprises a frame structure including a plurality of arms extending radially from a common central hub.

Each arm comprises a plurality of thermally conductive sections connected in series by thermally insulating material. Each metal section comprises one or more pairs of metal rods secured together in parallel along their lengths. The two rods in a pair are made of different metal materials exhibiting different thermal expansion coefficients; whereby the configuration of the pair will depend on the temperature to which the pair is heated.

Each section is equipped with a respective heater for controlling the temperature of the thermally conductive section independently of the temperature of other thermally conductive sections. Solar panels are supported on the arms of the support frame, with electrical wiring between each solar panel to provide series and/or parallel electrical connections between the solar panels according to the desired output voltage for the solar panel system.

Each solar panel comprises a respective set of solar cells, e.g. photovoltaic cells which convert solar radiation into electrical energy. One solar cell may generate a relatively small output voltage (e.g. 10V, 20V, 30V etc.), and electrically connecting individual cells in series can achieve higher output voltages (e.g. 300V, 500V, 1000V) to meet the voltage requires for a load to be supplied by the solar panel system. Parallel electrical connections between series-connected groups of cells (each series-connected group having the same output voltage) can achieve higher output powers at the same output voltage.

As mentioned above, the configuration of the support frame can be reversibly, dynamically and flexibly changed by controlling the electrical input power to the heat generation units. Each possible configuration of the support frame is characterised by a respective set of locations and/or orientations for the solar panels supported by the support frame.

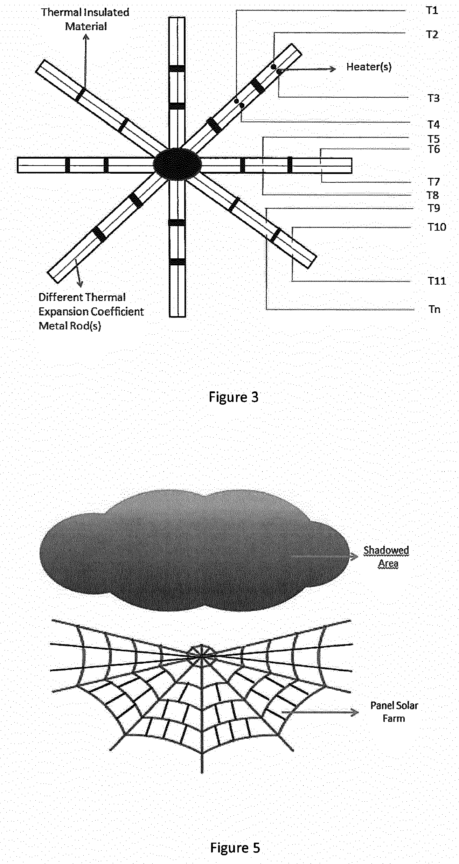

Each solar panel is equipped with a sensor for measuring an indicator of the efficiency (e.g. an output power sensor) of the solar panel, which sensor is configured to provide a signal indicative of the value of the measured efficiency indicator (e.g. output power) to a controller (STEP 400 of Figure 4).

Based on the signals output by the sensors for each of the individual solar panels, a processor at the controller stores information about the values of the measured efficiency indicator for each solar panel, and operates according to a selection algorithm to sort the solar panels in terms of the size of their measured efficiency indicator values. The processor identifies one or more solar panels having the highest (best) efficiency (high efficiency solar panels) and one or more solar panels having the lowest (worst) efficiency (low efficiency solar panels) (STEP 402 of Figure 4).

Based on information about the current frame configuration and current location and orientation of the high efficiency solar panels and low efficiency solar panels, the processor then operates according to a second algorithm to determine, a new frame configuration for the support frame calculated to produce a higher total efficiency (e.g. total output power) for the collection of all solar panels supported by the support frame, such as a new frame configuration that brings the location and/or orientation of the low efficiency solar panels closer to the location and/or orientation of the high efficiency solar panels (STEP 404 of Figure 4).

The processor then calculates heat generator unit excitation coefficients for the heaters at each section of the support frame to achieve the determined new frame configuration (STEP 406 of Figure 4). This calculation uses an e^x formula, where x is a function of position, location and power data of the solar panels.

The processor controls the electrical input power to each heater to achieve respective heat levels T₁, T₂, T₃,••••••, Tₙ₋₁, Tₙ based on the respective calculated heat generator unit excitation coefficients; and the heat generated by the heaters causes bending and/or twisting of the arms of the support frame to produce a new configuration for the support frame, and thus a new configuration for the collection of solar panels supported by the support frame (STEP 408 of Figure 4).

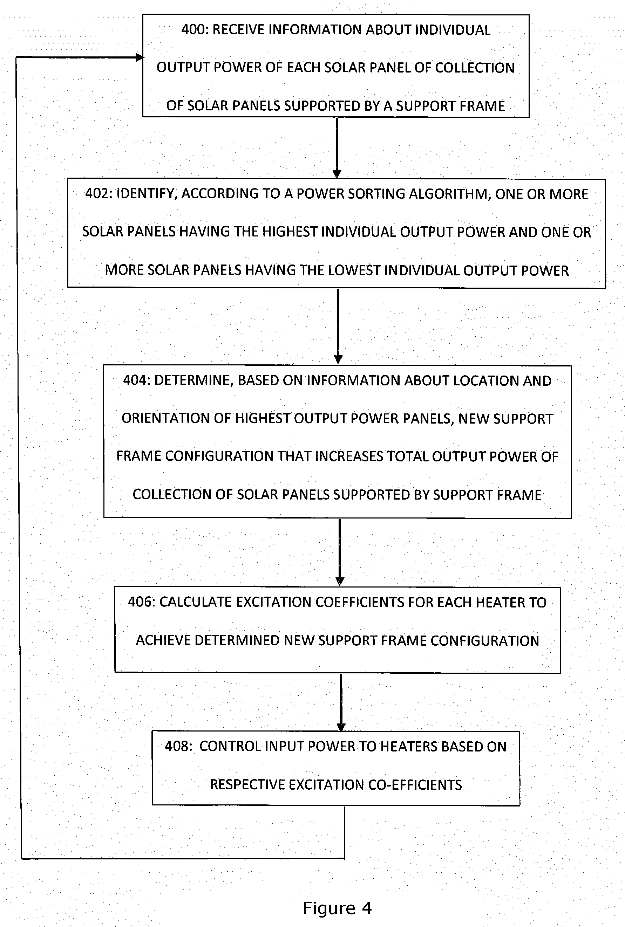

This set of operations is repeated at predetermined intervals of time, whereby the configuration of the support frame, and thus the configuration of the collection of solar panels supported by the support frame, is continuously and dynamically adjusted in accordance with the efficiency level feedback (e.g. individual output power feedback) for each solar panel. For example, the configuration of the support frame would thus change in response to some of the solar panels temporarily experiencing poorer light conditions than other solar panels, e.g. as a result of some solar panels temporarily experiencing greater cloud shadow than other solar panels. Figure 5 schematically illustrates the support frame changing configuration in partial shadow conditions.

The above-described system can operate with a higher efficiency than the conventional sun tracking system. Automatic control of the support frame configuration based on feedback about the individual efficiency of each solar panel achieves maximum possible total efficiency whenever the sun is in the sky (morning and afternoon). The above-described technique facilitates the construction of solar farms on different types of land, including relatively rugged terrain, and also facilitates the construction of solar farms in geographical regions where broken cloud coverage is common.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method, comprising: measuring at least one performance indicator for each solar energy device of a plurality of solar energy devices; and controlling at least one operating parameter of at least one of the plurality of solar energy devices based at least partly on a measured performance indicator of one or more other solar energy devices of the plurality of solar energy devices.

2. A method according to claim 1, comprising: controlling at least one operating parameter of at least one of the plurality of solar energy devices based at least partly on at least one operating parameter of the one or more solar energy devices having the best measured performance indicator.

3. A method according to claim 1 or claim 2, wherein the at least one operating parameter of a solar energy device comprises at least one or more of: (i) the location of the solar energy device relative to another solar energy device of the plurality of solar energy device, and (ii) the orientation of the solar energy device relative to another solar energy device of the plurality of solar energy devices.

4. A method according to any of claims 1 to 3, wherein controlling at least one operating parameter of at least one of the plurality of solar energy devices, comprises controlling the configuration of a support frame supporting the plurality of solar energy devices.

5. A method according to claim 4, wherein controlling the configuration of the support frame supporting the plurality of solar energy device, comprises electrically controlling the temperature of one or more portions of the support frame.

6. A method according to claim 4 or claim 5, wherein the frame comprises a plurality of arms extending from a hub and supporting the plurality of solar energy devices, and controlling the configuration of the support frame comprises controlling the orientation of one or more of the plurality of arms.

7. A method according to claim 6, wherein each arm comprises a plurality of thermally conductive sections separated by thermally insulating sections, and wherein controlling the configuration of the support frame comprises independently controlling the temperature of each thermally conductive section.

8. A method according to claim 6 or claim 7, wherein each thermally conductive section comprises one or more sets of metal rods secured together in parallel, wherein the metal rods in each set comprise rods of different metal materials exhibiting different thermal expansion coefficients.

9. A method according to any preceding claim, wherein said at least one performance indicator comprises an electrical power output of the solar energy device.

10. A method, comprising: controlling the configuration of a support frame supporting a plurality of solar energy devices, wherein the controlling comprises electrically controlling the temperature of one or more sections of the support frame.

11. A method, comprising: controlling the configuration of a support frame supporting a plurality of solar energy devices, based at least partly on one or more measurements of one or more performance indicators of one or more solar energy devices of the plurality of solar energy devices, wherein the support frame is capable of adopting a plurality of different configurations in which one or more of the solar energy devices have at least different locations and/or orientations relative to one another.

12. Apparatus, comprising: means for measuring at least one performance indicator for each solar energy device of a plurality of solar energy devices; and means for controlling at least one operating parameter of at least one of the plurality of solar energy devices based at least partly on a measured performance indicator of one or more other solar energy devices of the plurality of solar energy devices.

13. Apparatus comprising: means for controlling the configuration of a support frame supporting a plurality of solar energy devices, wherein the controlling comprises electrically controlling the temperature of one or more sections of the support frame.

14. Apparatus comprising: means for controlling the configuration of a support frame supporting a plurality of solar energy devices, based at least partly on one or more measurements of one or more performance indicators of one or more solar energy devices of the plurality of solar energy devices, wherein the support frame is capable of adopting a plurality of different configurations in which one or more of the solar energy devices have at least different locations and/or orientations relative to one another.

15. A computer program product comprising program code means which when loaded into a computer controls the computer to perform a method according to any of claims 1 to 11.
